# EUROPEAN PATENT APPLICATION

(11) **EP 2 410 208 A2**
(43) Date of publication of application: **25.01.2012**
(21) Application number: 11174883.6
(22) Date of filing: 21.07.2011
(51) Int. Cl.: F16H 55/18, F16H 57/04

(54) **Motion transmitting apparatus having an oil-lubricated gear clearance eliminating device**

(30) Priority: 23.07.2010 TW 099124355
(71) Applicant: Kwang Yang Motor Co., Ltd., Kaohsiung (TW)
(72) Inventor: Kuo, Wei-Shin, 807 Kaohsiung City (TW); Pu, Chun-Hung, 833 Kaohsiung City (TW)
(74) Representative: von Kreisler Selting Werner

(57) **Abstract**

A motion transmitting apparatus includes a driving gear (202), a rotating shaft (201), a first driven gear (3) sleeved fixedly on the rotating shaft (201), and a gear clearance eliminating device. The gear clearance eliminating device includes a second driven gear (4) sleeved rotatably on an annular flange (31) of the first driven gear (3), at least one spring (6) disposed among the first and second driven gears (3,4) and an assembly of the first and second driven gears (3,4), a ring plate (7), and a C-shaped retaining ring (5) for retaining the ring plate (7) on the annular flange (31) . At least one oil-receiving groove (33) is formed in the annular flange (31), crosses the positioning groove (34), and has an inner end aligned with the second driven gear (4).

## Description

This invention relates to a gear clearance eliminating device, and more particularly to an oil-lubricated gear clearance eliminating device.

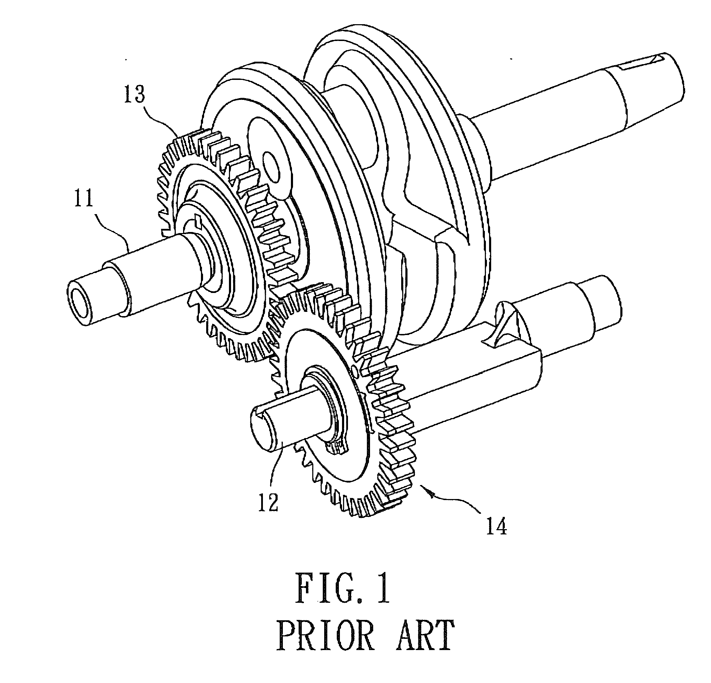

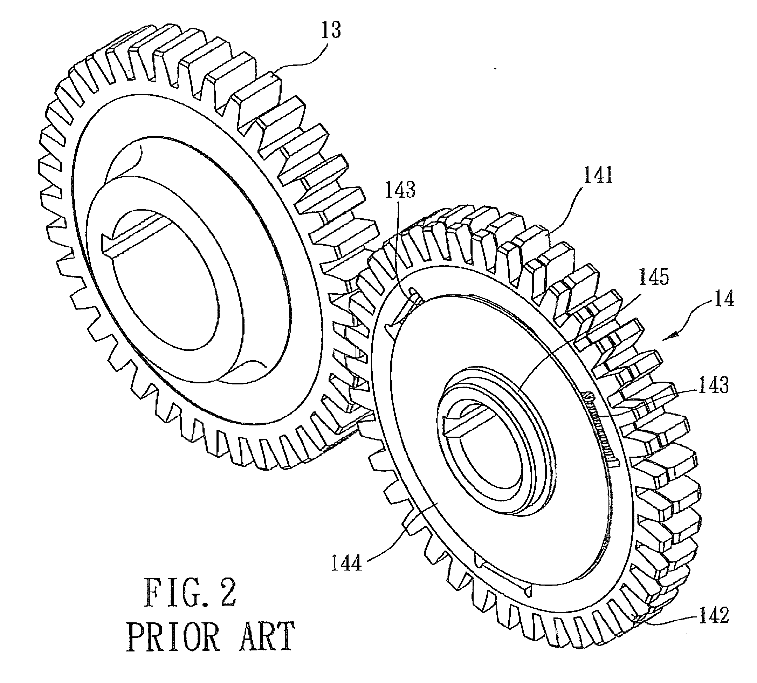

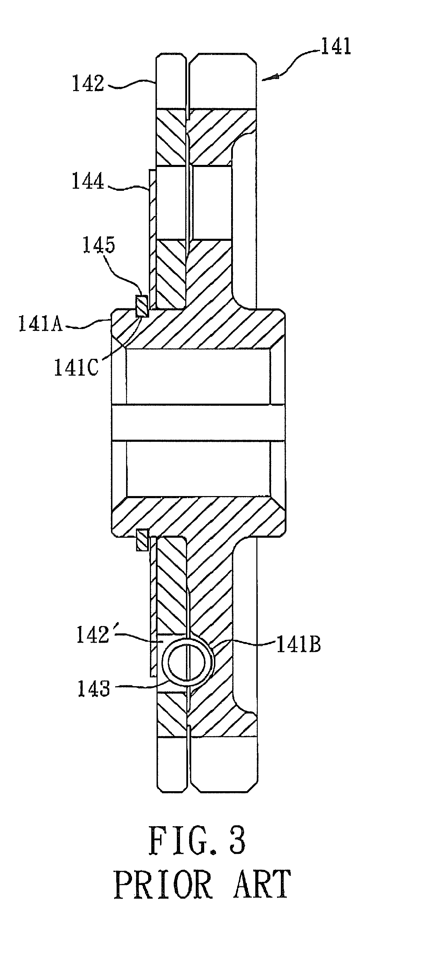

Referring to Fig. 1, a conventional motion transmitting apparatus includes a crankshaft 11, a balance shaft 12, a driving gear 13 sleeved fixedly on the crankshaft 11, and a driven gear unit 14 sleeved fixedly on the balance shaft 12 and meshing with the driving gear 13. With further reference to Figs. 2 and 3, the driven gear unit 14 includes a first driven gear 141 sleeved fixedly on the balance shaft 12 and meshing with the driving gear 13, a second driven gear 142 sleeved rotatably on an annular flange (141A) of the first driven gear 141, a plurality of coiled compression springs 143 received respectively within a plurality of grooves (141B) in a side surface of the first driven gear 141 and extending respectively into a plurality of apertures 142' in the second driven gear 142, a ring plate 144 sleeved on the flange (141A) and covering the openings 142' for confining the springs 143 between the first and second driven gears 141, 142, and a C-shaped retaining ring 145 received within an annular groove (141C) in the flange (141A) for retaining the ring plate (144) on the flange (141A).

During rotation of the first and second driven gears 141, 142, due to the presence of the springs 143, the first and second driven gears 141, 142 rotate relative to each other by a very small angle for eliminating clearance between the driving gear 13 and an assembly of the first and second driven gears 141, 142. Consequently, noise generated from relative rotation between the driving gear 13 and the assembly of the first and second driven gears 141, 142 can be reduced. A problem is encountered by the conventional motion transmitting apparatus. That is, serious wear occurs between the second driven gear 142 and the flange (141A) due to frequent change in the rotational direction of the second driven gear 142 relative to the first driven gear 141.

The object of this invention is to provide a motion transmitting apparatus that includes an oil-lubricated gear clearance eliminating device, which can reduce wear experienced by two driven gears.

Accordingly, a motion transmitting apparatus of this invention includes a driving gear, a rotating shaft, a first driven gear sleeved fixedly on the rotating shaft, and a gear clearance eliminating device. The gear clearance eliminating device includes a second driven gear sleeved rotatably on an annular flange of the first driven gear, at least one spring disposed among the first and second driven gears for eliminating clearance between the driving gear and an assembly of the first and second driven gears, a ring plate for confining the spring between the first and second driven gears, and a C-shaped retaining ring for retaining the ring plate on the annular flange. At least one oil-receiving groove is formed in the annular flange, crosses the positioning groove, and has an inner end aligned with the second driven gear. Lubricating oil can be received within the oil-receiving groove so as to facilitate smooth rotation of the second driven gear and reduce wear experienced by the second driven gear and the flange.

These and other features and advantages of this invention will become apparent in the following detailed description of a preferred embodiment of this invention, with reference to the accompanying drawings, in which:
Fig. 1 is a perspective view of a conventional motion transmitting apparatus;
Fig. 2 is a perspective view of a driving gear and a driven gear unit of the conventional motion transmitting apparatus;
Fig. 3 is a fragmentary sectional view of the conventional transmitting apparatus;
Fig. 4 is an exploded perspective view of the preferred embodiment of a motion transmitting apparatus according to this invention;
Fig. 5 is a fragmentary sectional view of the preferred embodiment; and
Fig. 6 is a fragmentary perspective view of the preferred embodiment, illustrating an oil-receiving groove.

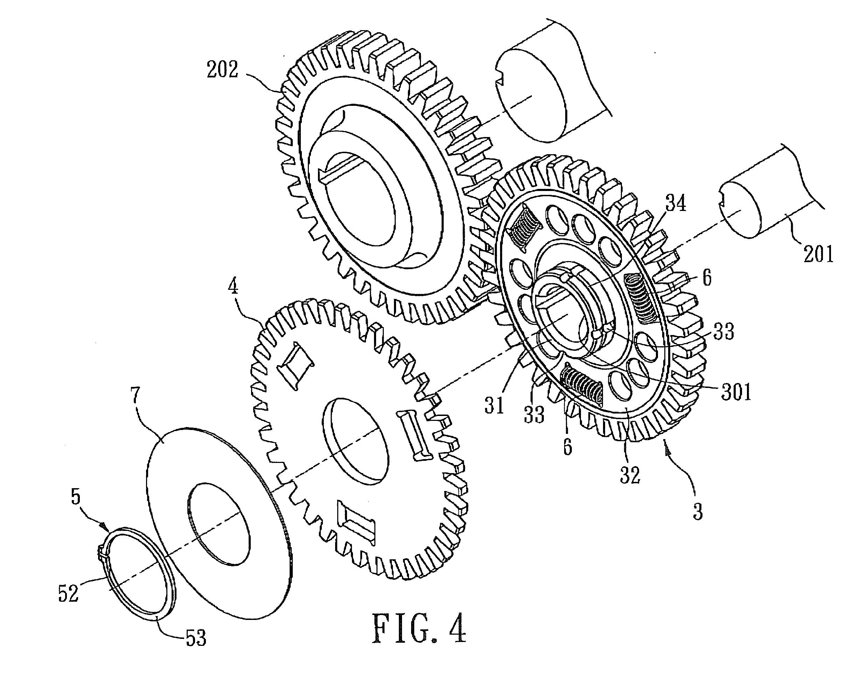

Referring to Fig. 4, the preferred embodiment of a motion transmitting apparatus according to this invention includes a driving gear 202, a rotating shaft 201, a first driven gear 3 sleeved fixedly on the rotating shaft 201 and meshing with the driving gear 202, and an oil-lubricated gear clearance eliminating device. The first driven gear 3 has an annular flange 31 extending axially from an inner periphery thereof and having an annular outer surface 311 formed with an annular positioning groove 34.

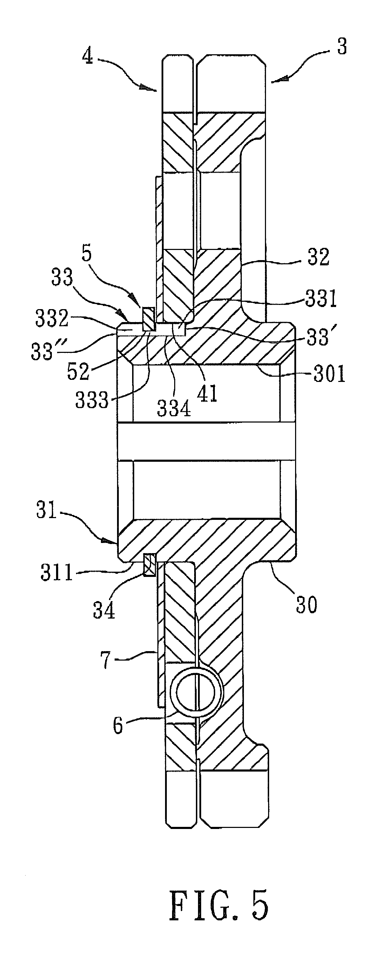

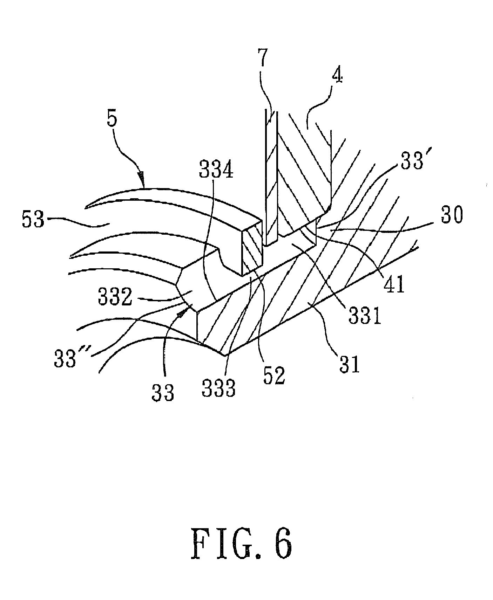

With further reference to Figs. 5 and 6, the gear clearance eliminating device includes a second driven gear 4 sleeved rotatably on the first driven gear 3 and meshing with the driving gear 202, a plurality of coiled compression springs 6 disposed between the first and second driven gears 3, 4 in a known manner for eliminating clearance between the driving gear 202 and an assembly of the first and second driven gears 3, 4 during rotation of the first and second driven gears 3, 4, and a ring plate 7 sleeved on the annular flange 31 for confining the spring 6 between the first and second driven gears 3, 4 in a known manner. The second driven gear 4 is disposed between the first driven gear 3 and the ring plate 7. The gear clearance eliminating device further includes a C-shaped retaining ring 5 received within the annular positioning groove 34 in the annular flange 31 so as to confine the second driven gear 4 and the ring plate 7 between the first driven gear 3 and the C-shaped retaining ring 5. In this embodiment, the gear clearance eliminating device is disposed within an engine box.

The first driven gear 3 further has a sleeve portion 30, from which the annular flange 31 extends, a central bore 301 defined by the sleeve portion 30 and permitting extension of the rotating shaft 201 therethrough, and a toothed portion 32 extending radially and outwardly from the sleeve portion 30. The annular outer surface 311 of the annular flange 31 is further formed with three angularly equidistant oil-receiving grooves 33 that extend along an axial direction of the annular flange 31, that cross the positioning groove 34, and that can receive lubricating oil. Each of the oil-receiving grooves 33 has an inner end 33' aligned with the second driven gear 4, and an open outer end 33" opposite to the inner end 33' . Alternatively, the gear clearance eliminating device may include only one oil-receiving groove 33.

Each of the oil-receiving grooves 33 is defined by a bottom wall 334. The C-shaped retaining ring 5 has an inner peripheral surface 52 that is spaced apart from the bottom walls 334 of the oil-receiving grooves 33, so as to allow for flow of the lubricating oil within a space 333 between the inner peripheral surface 52 and each of the bottom walls 334.

Each of the oil-receiving grooves 33 is divided by an outer side surface 53 of the C-shaped retaining ring 5 into an oil-storing area 331 and a lead-in area 332. The oil-storing area 331 of each of the oil-receiving grooves 33 is defined among the C-shaped retaining ring 5, the ring plate 7, the annular flange 31, and the second driven gear 4.

When the first driven gear 3 is driven by the driving gear 202 to rotate in a direction, each of the springs 6 is compressed to store a return force. Hence, the second driven gear 4 is biased by the springs 6 to rotate relative to the first driven gear 3 by a very small angle in an opposite direction to thereby eliminate clearance between the driving gear 202 and an assembly of the first and second driven gears 3, 4.

It should be noted that, during idle rotation of the rotating shaft 201, the rotational speed of the first driven gear 3 is low. Hence, lubricating oil in the engine box is splashed onto the first driven gear 3 and accumulated within the oil-receiving grooves 33. As soon as the lubricating oil splashed is accepted by the oil-receiving grooves 33, it flows from the lead-in area 332 into the oil-storing area 331 to thereby come into contact with an annular inner surface 41 of the second driven gear 4.

Subsequently, when the rotating shaft 201 is accelerated, by virtue of centrifugal force, the lubricating oil in the oil-storing area 331 of the oil-receiving groove 33 is thrown radially and outwardly. At this time, due to obstruction of the C-shaped retaining ring 5, outflow of the lubricating oil through the lead-in area 331 can be prevented. As a result, the lubricating oil flows between the annular inner surface 41 of the second driven gear 4 and the annular flange 31 to reduce effectively wear experienced by the annular inner surface 41 of the second driven gear 4 and the annular flange 31.

In view of the above, the oil-lubricated gear clearance eliminating device of the motion transmitting apparatus of this invention has the following advantages:
1. Good lubricating effect: When the first and second driven gears 3, 4 are rotated, the lubricating oil flows into the oil-receiving grooves 33 to contact the annular inner surface 41 of the second driven gear 4, thereby avoiding direct contact between the annular inner surface 41 of the second driven gear 4 and the annular flange 31.
2. Uniform distribution of lubricating oil films:
   Since the oil-receiving grooves 33 are angularly equidistant, the lubricating films can be distributed uniformly on the annular inner surface 41 of the second driven gear 4, thereby reducing effectively wear experienced by the second driven gear 4.
3. Easy flow of the lubricating oil into the oil-storing area 331: When the rotating shaft 201 is rotated idly, and when the lubricating oil is splashed onto the first driven gear 3, the lubricating oil can flow into the oil-storing area 331 via the lead-in area 332.
4. Storage of sufficient lubricating oil: The lubricating oil disposed in the oil-storing area 332 can be prevented by the C-shaped retaining ring 5 from undesired outflow.

## Claims

1. A motion transmitting apparatus including:
a driving gear (202);
a rotating shaft (201);
a first driven gear (3) sleeved fixedly on the rotating shaft (201) and meshing with the driving gear (201), the first driven gear (3) having an inner periphery and an annular flange (31) that extends axially from the inner periphery and that has an annular outer surface (311) formed with an annular positioning groove (34);
a second driven gear (4) sleeved rotatably on the annular flange (31) of the first driven gear (3) and meshing with the driving gear (201);
at least one spring (6) disposed between the first and second driven gears (3, 4) for eliminating clearance between the driving gear (202) and an assembly of the first and second driven gears (3, 4) during rotation of the first and second driven gears (3, 4);
a ring plate (7) sleeved on the annular flange (31) for confining the spring (6) between the first and second driven gears (3, 4), such that the second driven gear (4) is disposed between the first driven gear (3) and the ring plate (7); and
a C-shaped retaining ring (5) received within the annular positioning groove (34) in the first driven gear (3) so as to confine the second driven gear (4) and the ring plate (7) between the first driven gear (3) and the C-shaped retaining ring (5);
**characterized by** the first driven gear (3) further having at least one oil-receiving groove (33) that is formed in the annular outer surface (311) of the annular flange (31), that crosses the positioning groove (34), and that has an inner end aligned with the second driven gear (4).

2. The motion transmitting apparatus as claimed in Claim 1, **characterized in that** the first driven gear (3) has three the oil-receiving grooves (33), the oil-receiving grooves (33) being angularly equidistant.

3. The motion transmitting apparatus as claimed in Claim 1, **characterized in that** the oil-receiving groove (33) is defined by a bottom wall (334), and the C-shaped retaining ring (5) has an inner peripheral surface (52) that is spaced apart from the bottom wall (334) so as to allow for flow of lubricating oil within a space between the inner peripheral surface (52) and the bottom wall (334).

4. The motion transmitting apparatus as claimed in Claim 1, **characterized in that** the oil-receiving groove (33) further has an open outer end (33") opposite to the inner end (33'), and is defined by a bottom wall (334), and the C-shaped retaining ring (5) has an inner peripheral surface (52) that is spaced apart from the bottom wall (334) so as to allow for flow of lubricating oil within a space between the inner peripheral surface (52) and the bottom wall (334), and an outer side surface (53) dividing the oil-receiving groove (33) into an oil-storing area (331) and a lead-in area (332), the oil-storing area (331) being defined among the C-shaped retaining ring (5), the ring plate (7), the annular flange (31), and the second driven gear (4).
